# EUROPEAN PATENT SPECIFICATION

(11) **EP 0 895 666 B1**
(45) Date of publication and mention of the grant of the patent: **15.01.2003**
(21) Application number: 97919521.1
(22) Date of filing: 22.04.1997
(51) Int. Cl.: H02K 5/18

(54) **HOUSING FOR AN ELECTRIC MACHINE**
GEHÄUSE FÜR EINE ELEKTRISCHE MASCHINE
CHASSIS POUR MACHINE ELECTRIQUE

(30) Priority: 22.04.1996 GB 9608270
(43) Date of publication of application: 10.02.1999
(73) Proprietor: Control Techniques Dynamics Limited, Andover, Hampshire SP10 5AB (GB)
(72) Inventor: BOUGHTWOOD, Martin, Nr. Shipton Bellinger SP9 7YQ (GB)
(74) Representative: Roberts, Gwilym Vaughan
(86) International application number: GB9701112
(87) International publication number: WO97040569

(56) References cited:
- DE-B- 1 276 801
- DE-C- 558 487
- PATENT ABSTRACTS OF JAPAN vol. 017, no. 473 (E-1423), 27 August 1993 & JP 05 111211 A (MITSUBISHI ELECTRIC CORP), 30 April 1993,
- PATENT ABSTRACTS OF JAPAN vol. 018, no. 455 (E-1595), 24 August 1994 & JP 06 141507 A (NIPPON DENSAN CORP), 20 May 1994,
- PATENT ABSTRACTS OF JAPAN vol. 005, no. 153 (E-076), 26 September 1981 & JP 56 086047 A (HITACHI LTD), 13 July 1981,
- PATENT ABSTRACTS OF JAPAN vol. 096, no. 006, 28 June 1996 & JP 08 033255 A (HITACHI LTD;OTHERS: 01), 2 February 1996,
- PATENT ABSTRACTS OF JAPAN vol. 012, no. 153 (E-607), 11 May 1988 & JP 62 268335 A (TOSHIBA CORP), 20 November 1987,

## Description

The invention relates to a housing for an electric machine, in particular an electric motor or generator housing having heat dissipating fins.

Typically, an electric motor comprises a stator and a rotor rotatable relative to the stator. One or other of the stator and rotor generally includes a plurality of poles around which windings are provided and through which an energising current is passed to magnetize the poles and cause rotation of the rotor. For example in a brushless permanent magnet motor an elongate generally cylindrical stator is provided within which an elongate cylindrical rotor rotates about an axis of rotation. The stator includes a plurality of radially inwardly projecting axially extending poles defining slots therebetween, and windings held in the slots. The rotor includes a plurality of radially outwardly projecting axially extending poles comprising permanent magnets. The energising current is passed through the windings in such a manner as to induce a torque in the rotor.

A major limitation on the output power available from an electric motor of a given size is the amount of heat generated in energising the windings. This is particularly applicable as various international or national standards exist limit or define the physical size of machines of different power ratings.

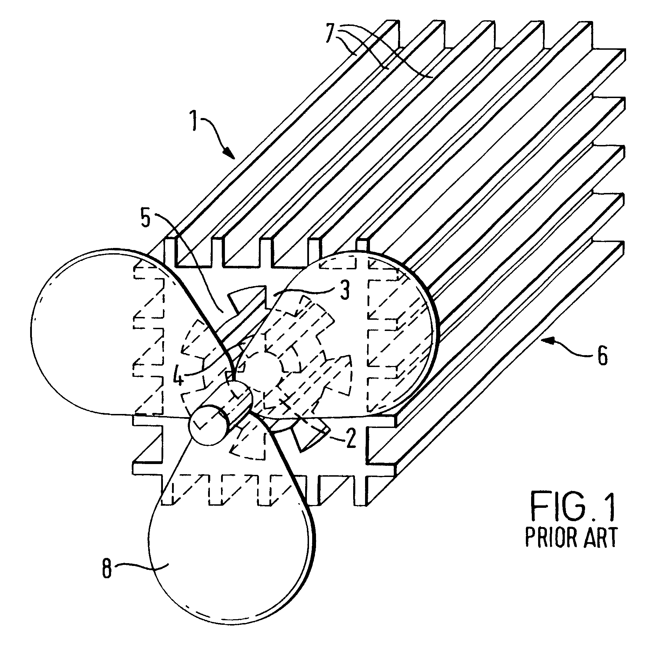

One known approach to improving heat dissipation and hence allowing increased output power for a given motor size, is shown in Fig. 1. Fig. 1 shows schematically an electric motor designated generally as 1 including a rotor 2 and a stator 3, the rotor and stator having poles 4 and 5 respectively. Windings are provided on the stator poles 5 (not shown for the purposes of clarity). The arrangement is mounted in a housing 6. As can be seen the housing includes a plurality of axially extending fins 7 extending the length, or substantially the length, of the housing and disposed on all faces of the housing. A fan 8 is provided which can be mounted on the rotor. The fan 8 directs air along the fins 7 to carry heat away. Because the fins 7 increase the surface area of the housing 6, greater heat dissipation is introduced. This system is known as forced cooling.

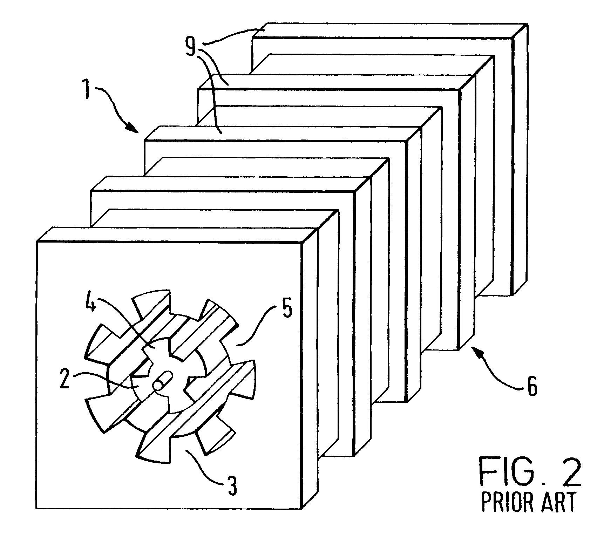

An alternative arrangement is shown in Fig. 2 and is designed to remove the need for the additional fan component. Once again the motor shown generally as 1 includes a rotor 2 and a stator 3 having poles 4 and 5 respectively. The housing 6 includes a plurality of fins 9 all of which extend in a plane normal to the axis of rotation, that is, radially. A temperature gradient is established as a result of which a corresponding pressure gradient is induced which gives rise to upward air circulation carrying away the heat. As a result of this, natural cooling occurs without the need for a fan.

JP-A-08033255 discloses an electric machine having a housing and circular fins projecting from it in a plane perpendicular to the axis of rotation.

It is desired, however, to arrive at a cooling arrangement for an electric motor which allows yet further increased heat dissipation and hence increased output power for a given motor size.

According to the invention there is provided an electric machine including a stator, a rotor having an axis of rotation and a housing for the stator and rotor, the housing having a main body and including a plurality of spaced, parallel heat dissipating members projecting outwardly from the main body, wherein each heat dissipating member lies substantially in a plane inclined relative to a plane perpendicular to the axis of rotation and inclined relative to the axial direction. In effect, therefore, the heat dissipating members are inclined to both the radial and axial directions. As a result improved heat dissipation is observed, and the machine is further usable either in a horizontal or vertical orientation, the orientation being determined by the axial direction.

The heat dissipating member may comprise a fin, a rib, or a vane giving rise to optimum heat dissipation.

The housing may have a geometry defining a second axis normal to the axis of rotation, and the heat dissipating member may lie substantially in a plane rotated relative to the plane normal to the axis of rotation about the second axis or in a plane rotated relative to the plane normal to the axis of rotation about a third axis, the third axis lying in the normal plane and being non-parallel to the second axis. In the latter case, greater symmetry and hence improved performance is observed. The heat dissipating member may lie in a plane rotated through an angle in the range 10° to 30° or 30° to 60° or 60° to 80° about the respective axis and most preferably lies in a plane rotated through 45° about said axis. The housing may have square symmetry in a plane normal to the axis of rotation, the second axis comprising the perpendicular bisector of a square side or square symmetry in a plane normal to the axis of rotation, the third axis comprising the diametral bisector of the square and the heat dissipating member lying in a plane rotated relative to the plane normal to the axis of rotation about the third axis. The square symmetry of the housing may be defined by the or each heat dissipating member.

The machine may comprise an electric motor, for example a brushless permanent magnet electric motor.

According to the invention there is further provided a housing for an electric machine having an axis of rotation, the housing including at least one heat dissipating member, the heat dissipating member extending across the housing wherein the heat dissipating member (10) lies substantially in a plane inclined relative to a plane perpendicular to the axis of rotation (A) and inclined relative to the axial direction.

Embodiments of the invention will now be described, by way of example, with reference to the accompanying drawings of which:
Fig. 1 shows schematically one known type of cooling arrangement for an electric motor;
Fig. 2 shows another known type of cooling arrangement for an electric motor;
Fig. 3A illustrates one type of angled heat dissipating fin according to the present invention;
Fig. 3B illustrates another type of angled heat dissipating fin according to the present invention;
Fig. 4A is a schematic side view of a motor housing including fins angled as shown in Fig. 3A;
Fig. 4B is a schematic plan view of a motor housing including fins angled as shown in Fig. 3A;
Fig. 5A is a schematic side view of a motor housing including fins angled as shown in Fig. 3B;
Fig. 5B is a schematic plan view of a motor housing including fins angled as shown in Fig. 3B;
Fig. 6A is a side view of a motor housing according to the present invention;
Fig. 6B is an end view of the motor housing of Fig. 6A;
Fig. 6C is the other end view of the motor housing of Fig. 6A;
Fig. 7A is a perspective view of the motor housing from one end; and
Fig. 7B is a perspective view of the motor housing from the other end.

The following description will be made with reference to a brushless permanent magnet motor but it will be appreciated that it is applicable to any type of electric machine such as an electric motor or indeed other type of motor in which heat dissipation is a consideration.

The construction and operation of a brushless permanent magnet motor is well known. One such motor is sold under the trademark DUTYMAX available from Control Techniques Dynamics Limited of Andover, Hampshire, UK.

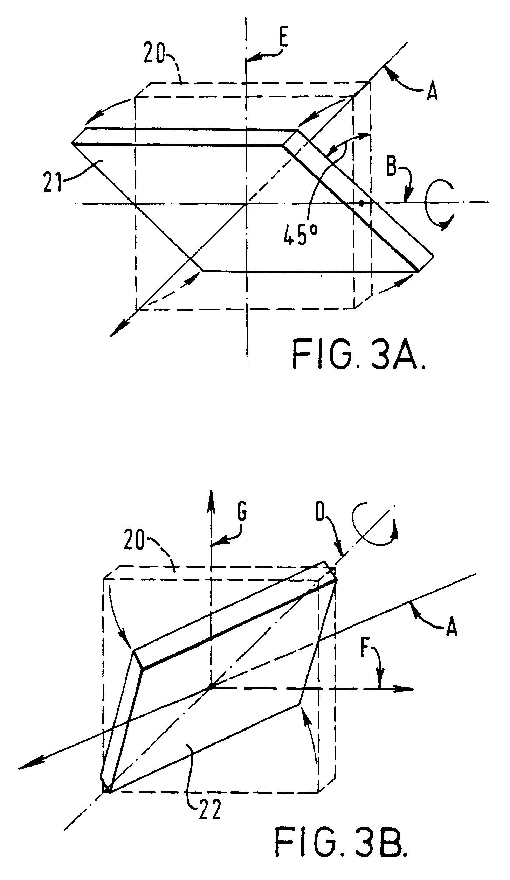

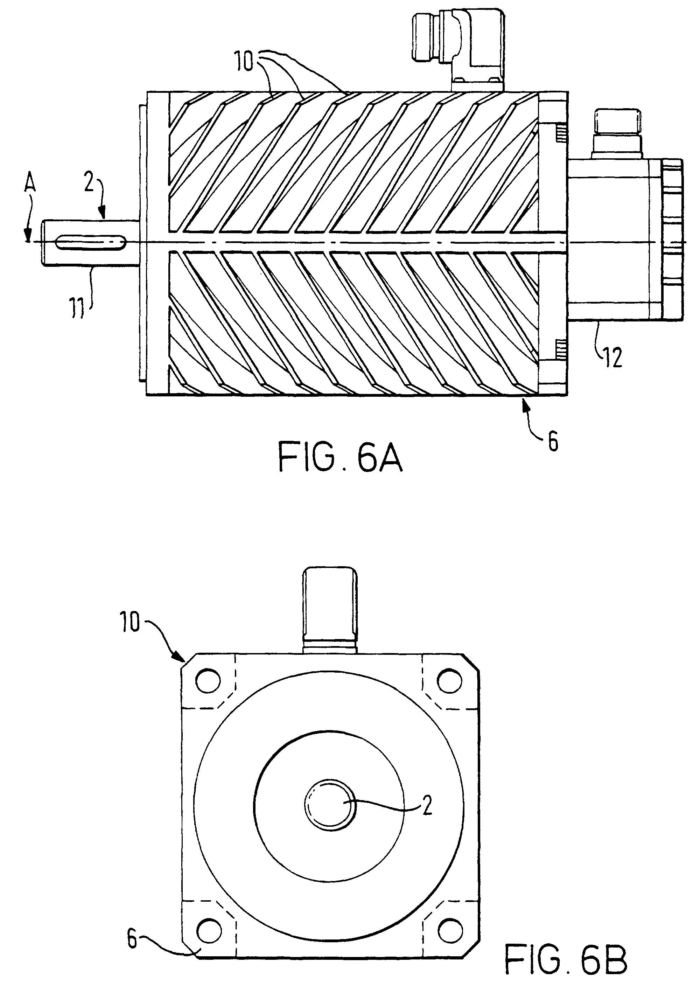

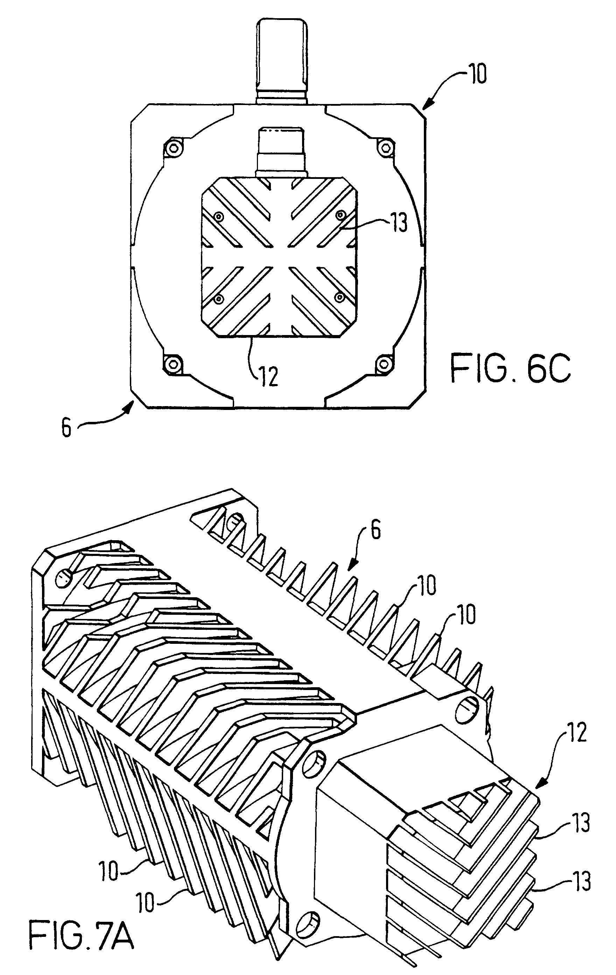

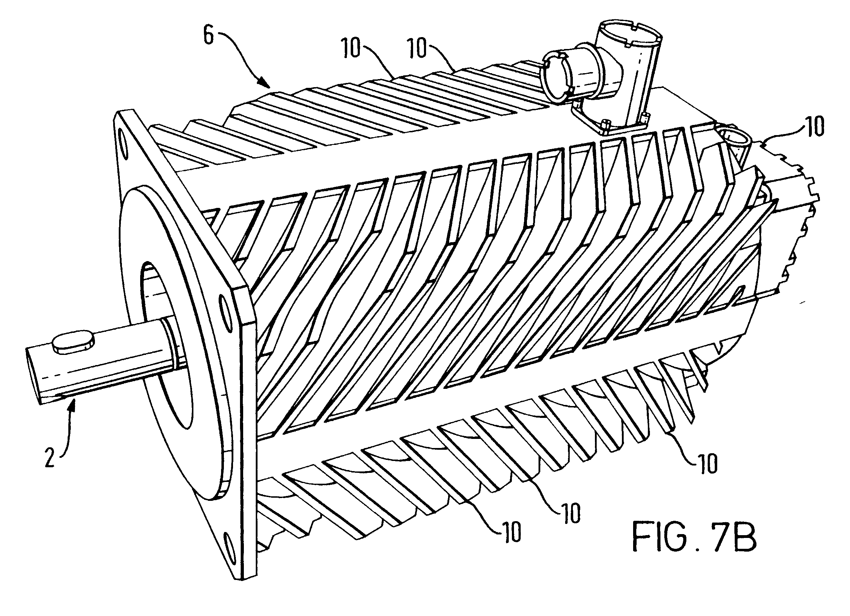

A motor according to the present invention is shown in Figs. 6A to 6C; 7A and 7B. The motor includes a rotor 2 and a stator (not shown) in a housing 6. The housing is provided with a plurality of heat dissipating members in the form of fins 10 in this embodiment. Each fin 10 lies in a plane inclined relative to a plane normal to the axis of rotation, as shown in Figs. 3a and 3b and as discussed in more detail below. It will be apparent to the skilled person that other forms of heat dissipating members, such as ribs or vanes, could be used to equal effect. The members increase the surface area of the housing and define guides or channels for air flow between them.

Referring to Figs 6A to 6C in more detail, the main body of the housing 6 is of substantially circular cross section normal to the axis of rotation (Fig. 6C). The fins 10 are effectively triangular in shape, and are located and dimensioned such that the main body 6 and fins 10 together define a volume the boundary of which is effectively cuboidal, having square faces of side length approximately equal to the diameter of the main body. In the embodiments shown the apex of each triangular fin is flattened - this is an optional feature and the apex may alternatively be, for example, complete or curved.

As seen from Fig. 6B each fin 10 lies in a plane inclined to a plane normal to the longitudinal axis of rotation (denoted by arrow A). By "inclined" it is meant that the respective planes are angled to one another and are neither parallel nor perpendicular to one another.

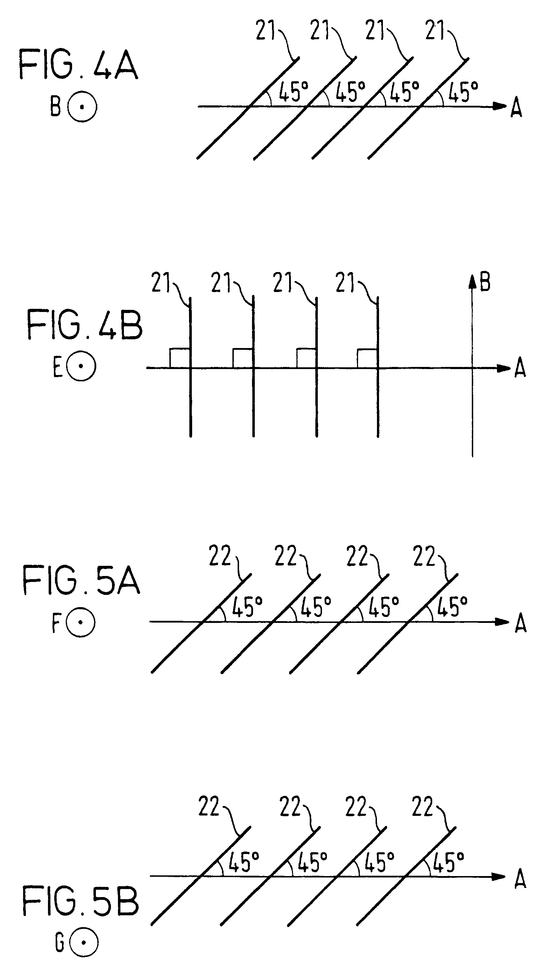

Various modes of inclination are possible. For example as shown in Fig. 3a, a section through the cuboid defining the volume of the housing can be taken normal to the longitudinal axis to define a notional square face 20. The axis of rotation is shown as A and a further axis B can be defined normal to the axis of rotation and lying in the plane 20. The fin 10 is contained in a plane shown as 21, the plane 21 being rotated about the axis B relative to plane 20. The axis B is defined as the perpendicular bisector running through two opposing sides of the plane 20. In the embodiment shown the angle of rotation is 45° but it may alternatively be in the range 10° to 20°, 20° to 30°, 30° to 45° or the complementary angle to the horizontal. A plurality of the fins are provided each lying in a plane spaced from and parallel to the plane 21. Because each plane is notionally rotated through an axis B, when the housing is viewed along the line B, each fin is at an angle of 45° to axis A (see Fig. 4a) and when viewed along a line orthogonal to axes A and B the fins extend perpendicular to axis A (Fig. 4b). An advantage of this arrangement is that manufacture is greatly simplified.

In a preferred embodiment shown in Fig. 3b, a notional square face 20 is provided as discussed above and a third axis D is defined running through opposing corners of the square face 20 i.e. diametrally. A plane 22 containing the fin is rotated about axis D relative to the square face 20. Once again in the embodiment shown the plane 22 is rotated through an angle of 45° but it may alternatively be in the range 10° to 20°, 20° to 30°, 30° to 45° or the complementary angle to the horizontal. A plurality of fins are provided, each lying parallel to one another parallel to plane 22 and being equally spaced. The views seen along axes F and G, orthogonal to each other and axis A and parallel to the sides of square face 20 are shown in Figs. 5a and 5b. It will be seen that, whether the fins are viewed along axis F or G, they extend at 45° to the axis A.

In the embodiment shown in Figs. 6A to 6C, 7A and 7B the fins 10 lie in a plane corresponding to plane 22 shown in Fig. 3b. The plane has been rotated through an angle of 45°. The substantially triangular portions comprising each fin 10 correspond to the vertices of the plane 22 lying on the axis D in each case. As a result the fins adopt the mutually opposing herringboned or chevron type pattern shown (when viewed in plan as in Fig. 6A). A housing extension 12 is mounted on one axial end of the housing holding a bearing and other components for rotor position detection. Angled fins 13 on the housing extension are visible from Fig. 6C. An alternative configuration for the fins 13 is shown in Fig. 7A.

The dimensions and spacing of the fins 10 are of course dependent upon the dimensions of the motor housing itself. For example where the cuboidal volume defined by the main body and fins 10 together has a square face dimension of 115mm by 115mm and an axial length of approximately 185mm (excluding the projecting part of the rotor 11 and the rearward housing extension 12) then the fins may be of 2mm thickness and pitch 11mm (measured in the axial direction). In fact it has been found for a fin thickness of 2mm that the pitch is optimally between 6 and 11mm. The spacing of the fins is dependent, inter alia, upon the fines heights; the greater the fin height, the greater the spacing should be to allow maximum air circulation. The cylindrical main body of the housing has circular diameter, in cross section, approximately equal to the square face dimension of 115mm as a result of which the fins project normally to a maximum distance of 20mm from the main body, measured to their apex which is squared off approximately 10mm from the fin tip.

The minimum fin width allowed by manufacturing restraints and tolerances is 2mm. In fact theory shows that a fin thickness of ½mm is optional for heat dissipation; any thinner and heat conduction through the fin to its tip is adversely affected. An advantage to decreasing the fin width down to ½mm would be the extra space that this would allow as a result of which extra fins would be added, improving heat dissipation further.

The arrangement shown in Figs. 3 to 5 gives rise to a surprising increase in heat dissipation by the housing. This heat dissipation can be explained by various mechanisms. For example each fin has an increased surface area. In addition, when the motor is mounted with its longitudinal axis horizontal, the fins effectively lie at 45° to the horizontal. As a result the air rising from the main body of the housing by convection impinges at an increased angle on the downwardly facing side of the fin as compared to a situation for radial fins. Turbulent flow conditions are thus increased giving rise to improved heat dissipation by carrying heat from the fin surface at a greater rate by virtue of the increased velocity incident on the surface.

In fact comparisons of motors, one having a housing merely comprising a cylindrical main body and the other having a housing including a main body and angled fins as discussed in the present invention, show that an improvement of 12°C is observed as regards the temperature drop at the main body surface when the angled fins are incorporated. Such an improvement can give rise to a considerable increase in power output for the same motor specification.

Also the inclination of each fin relative to the axis of the housing allows improved air circulation. As an additional advantage, whether the motor is placed with its axis vertical or horizontal, the same degree of heat dissipation is observed - this is in contrast to prior art arrangements in which radial fins normal to the longitudinal axis have been provided which will not work as efficiently when mounted with the longitudinal axis vertical as the heat convection process will be obstructed by the horizontally extending fins. This process is further improved when forced cooling is used, as is possible with the invention.

It will be appreciated that the embodiments shown are only one possibility. Firstly, as mentioned above, the invention is applicable to any type of electric machine including a housing where heat dissipation is a consideration for example a brushed a.c machine or a reluctance machine. Secondly other inclinations than 45° can be selected for the fins. The profile of the fins can be varied from the triangular rectilinear shape shown - for example circular fins may be used. The height and spacing of the fins can be varied to arrive at a desired heat dissipation rate. The fins may taper to simplify the casting process.

The housing is preferably made of aluminium and may be manufactured by a casting process, a moulding process or any other desired appropriate process.

## Claims

1. An electric machine including a stator, a rotor (2) having an axis of rotation (A) and a housing (6) for the stator and rotor (2), the housing (6) having a main body, and including a plurality of spaced, parallel heat dissipating members (10) projecting outwardly from the main body, **characterised in that** each heat dissipating member (10) lies substantially in a plane inclined relative to a plane perpendicular to the axis of rotation and inclined relative to the axial direction.

2. A machine as claimed in claim 1 in which the heat dissipating member (10) comprises a fin, a rib, or a vane.

3. A machine as claimed in claim 1 or 2 in which the housing has square symmetry in a plane normal to the axis of rotation, defining a second axis (B) comprising the perpendicular bisector of a square side and a third axis (D) comprising the diametral bisector of the square.

4. A machine as claimed in claim 3 in which the heat dissipating member (10) lies substantially in a plane rotated relative to the plane perpendicular to the axis of rotation(A) about the second axis (B).

5. A machine as claimed in claim 3 in which the heat dissipating member (10) lies substantially in a plane rotated relative to the plan perpendicular to the axis of rotation (A) about the third axis (D).

6. A machine as claimed in claim 4 or claim 5 in which the heat dissipating member (10) lies in a plane rotated through an angle in the range 10° to 30° or 30° to 60° or 60° to 80° about the respective axis and most preferably lies in a plane rotated through 45° about said axis.

7. A machine as claimed in any of claims 3 to 6 in which the square symmetry of the housing (6) is defined by the or each heat dissipating member (10).

8. A machine as claimed in any preceding claim comprising an electric motor.

9. A machine as claimed in claim 8 comprising a brushless permanent magnet electric motor.

10. A housing for an electric machine having an axis of rotation (A), the housing (6) including at least one heat dissipating member (10) extending across the housing, **characterised in that** the heat dissipating member (10) lies substantially in a plane inclined relative to a plane perpendicular to the axis of rotation (A) and inclined relative to the axial direction.

## Patentansprüche

1. Elektrische Maschine, welche einen Stator, einen Rotor (2) mit einer Rotationsachse (A) und ein Gehäuse (6) für den Stator und Rotor (2) aufweist, wobei das Gehäuse (6) einen Grundkörper mit einer Vielzahl von voneinander beabstandeten, parallelen wärmeableitenden Elementen (10) aufweist, die vom Grundkörper nach außen hervorragen, **dadurch gekennzeichnet, daß** jedes wärmeableitende Element (10) im wesentlichen in einer Ebene liegt, die relativ zu einer senkrecht zur Rotationsachse verlaufenden Ebene und relativ zur Axialrichtung geneigt ist.

2. Maschine nach Anspruch 1, wobei das wärmeableitende Element (10) eine Lamelle, Rippe oder einen Flügel umfaßt.

3. Maschine nach Anspruch 1 oder 2, wobei das Gehäuse in einer normal zur Rotationsachse liegenden Ebene quadratisch symmetrisch ist, die eine zweite Achse (B) definiert, die die senkrechte Halbierungslinie einer Quadratseite bildet, und eine dritte Achse (D), die die diametrale Halbierungslinie des Quadrats bildet.

4. Maschine nach Anspruch 3, wobei das wärmeableitende Element (10) im wesentlichen in einer Ebene liegt, die relativ zur Ebene senkrecht zur Rotationsachse (A) um die zweite Achse (B) gedreht ist.

5. Maschine nach Anspruch 3, wobei das wärmeableitende Element (10) im wesentlichen in einer Ebene liegt, die relativ zur Ebene senkrecht zur Rotationsachse (A) um die dritte Achse (D) gedreht ist.

6. Maschine nach Anspruch 4 oder 5, wobei das wärmeableitende Element (10) in einer Ebene liegt, die im Bereich von 10° bis 30° oder 30° bis 60° oder 60° bis 80° um die jeweilige Achse gedreht ist und vorzugsweise in einer Ebene liegt, die um 45° um diese Achse gedreht ist.

7. Maschine nach einem der Ansprüche 3 bis 6, wobei die quadratische Symmetrie des Gehäuses (6) durch das oder jedes wärmeableitende Element (10) definiert ist.

8. Maschine nach einem der vorstehenden Ansprüche, die ein Elektromotor ist.

9. Maschine nach Anspruch 8, die ein bürstenloser permanentmagnetischer Motor ist.

10. Gehäuse für eine elektrische Maschine mit einer Rotationsachse (A), wobei das Gehäuse (6) mindestens ein wärmeableitendes Element (10) aufweist, das quer über das Gehäuse verläuft, **dadurch gekennzeichnet, daß** das wärmeableitende Element (10) im wesenlichen in einer Ebene liegt, die relativ zu einer Ebene senkrecht zur Rotationsachse (A) und relativ zur Axialrichtung geneigt ist.

## Revendications

1. Machine électrique contenant un stator, un rotor (2) ayant un axe de rotation (A) et un logement (6) pour le stator et le rotor (2), le logement (6) ayant un corps principal, et contenant une pluralité d'éléments (10) dissipant la chaleur, parallèles et espacés, dépassant du corps principal vers l'extérieur, **caractérisée en ce que** chaque élément (10) dissipant la chaleur est situé essentiellement dans un plan incliné par rapport au plan perpendiculaire à l'axe de rotation et incliné par rapport au sens axial.

2. Machine selon la revendication 1 dans laquelle l'élément (10) dissipant la chaleur comprend une ailette, une nervure ou une aube.

3. Machine selon la revendication 1 ou 2 dans laquelle le logement a une symétrie quadratique dans un plan normal par rapport à l'axe de rotation, définissant un second axe (B) contenant la bissectrice perpendiculaire d'un côté de carré et un troisième axe (D) contenant la bissectrice diamétrale du carré.

4. Machine selon la revendication 3 dans laquelle l'élément (10) dissipant la chaleur est situé essentiellement dans un plan tourné par rapport au plan perpendiculaire à l'axe de rotation (A) autour du second axe (B).

5. Machine selon la revendication 3 dans laquelle l'élément (10) dissipant la chaleur est situé essentiellement dans un plan tourné par rapport au plan perpendiculaire à l'axe de rotation (A) autour du troisième axe (D).

6. Machine selon la revendication 4 ou la revendication 5 dans laquelle l'élément (10) dissipant la chaleur est situé dans un plan tourné d'un angle dans l'intervalle de 10° à 30° ou 30° à 60° ou 60° à 80° autour de l'axe respectif et plus préférablement est situé dans un plan tourné de 45° autour dudit axe.

7. Machine selon l'une quelconque des revendications 3 à 6 dans laquelle la symétrie quadratique du logement (6) est définie par le ou chaque élément (10) dissipant la chaleur.

8. Machine selon l'une quelconque des revendications précédentes contenant un moteur électrique.

9. Machine selon la revendication 8 contenant un moteur électrique à aimant permanent sans brosse.

10. Logement pour une machine électrique ayant un axe de rotation (A), le logement (6) contenant au moins un élément (10) dissipant la chaleur s'étendant à travers le logement, **caractérisé en ce que** l'élément (10) dissipant la chaleur est situé essentiellement dans un plan incliné par rapport au plan perpendiculaire à l'axe de rotation (A) et incliné par rapport au sens axial.
